# EUROPEAN PATENT APPLICATION

(11) **EP 4 513 033 A1**
(43) Date of publication of application: **26.02.2025**
(21) Application number: 23796315.2
(22) Date of filing: 24.04.2023
(51) Int. Cl.: F04B 39/00, C09K 5/04, F04C 29/00, F25B 1/00, F25B 41/40

(54) **USE AS REFRIGERANT FOR COMPRESSOR, COMPRESSOR, AND REFRIGERATION CYCLE DEVICE**

(30) Priority: 27.04.2022 JP 2022073178
(71) Applicant: DAIKIN INDUSTRIES, LTD., Osaka-shi, Osaka 530-0001 (JP)
(72) Inventor: GOTO, Tomoyuki, Osaka-shi, Osaka 530-0001 (JP); USUI, Takashi, Osaka-shi, Osaka 530-0001 (JP); OZAKI, Taichi, Osaka-shi, Osaka 530-0001 (JP); KUMAKURA, Eiji, Osaka-shi, Osaka 530-0001 (JP); IWATA, Ikuhiro, Osaka-shi, Osaka 530-0001 (JP); TANAKA, Masaki, Osaka-shi, Osaka 530-0001 (JP)
(74) Representative: Hoffmann Eitle
(86) International application number: PCT/JP2023/016102
(87) International publication number: WO 2023/210575

(57) **Abstract**

The robustness of refrigerant against disproportionation reactions is improved. Use, as refrigerant for a compressor (21), of a composition that contains one or two or more selected from a group consisting of ethylene-based fluoroolefins, 2,3,3,3-tetrafluoropropene (HFO-1234yf), and 1,3,3,3-tetrafluoropropene (HFO-1234ze), in which the compressor includes a discharge pipe (9, 9a) made of metal having a greater heat capacity than a discharge pipe of a compressor that uses R32, R410A, R134a, or R404A as refrigerant, or a casing (81) that includes an intake pipe connection section (87) made of metal having a greater heat capacity than an intake pipe connection section of a casing of the compressor that uses R32, R410A, R134a, or R404A as refrigerant.

## Description

### TECHNICAL FIELD

The present disclosure relates to use as refrigerant for a compressor, a compressor, and a refrigeration cycle apparatus.

### BACKGROUND ART

Conventionally, for a refrigeration apparatus, hydrofluoro-olefin (HFO refrigerant) having a lower global warming potential (Global Warming Potential: hereinafter, sometimes simply called GWP) than HFC refrigerant has been attracting attention. For example, 1,2-difluoroethylene (HFO-1132) is also discussed in Patent Literature 1 (JPA No. 2019-196312) as refrigerant having a low GWP.

### SUMMARY OF THE INVENTION

### <Technical Problem>

Such HFO refrigerant has a low GWP, but has poor stability. Accordingly, some types of it tend to cause a self-decomposition reaction, which is called a disproportionation reaction, under certain conditions. The disproportionation reaction is a chemical reaction in which two or more molecules of the same type react with one another, and resultantly turn into two or more different types of substances.

If refrigerant causes a disproportionation reaction in a compressor, the inside of the compressor instantaneously comes into a high-temperature and high-pressure state. Consequently, a compressor with excellent robustness in high-temperature and high-pressure states is desired.

### <Solution to Problem>

The inventors of the present application have diligently conducted a research for a compressor that can withstand high-temperature and high-pressure states even if refrigerant causes a disproportionation reaction and comes into any of such states, have resultantly newly found that a discharge pipe, an intake pipe, and a connection portion between the discharge pipe or the intake pipe and a casing in compressors are particularly prone to damage due to the disproportionation reaction, and have found that adoption of a configuration for these points that is different from conventional configurations can improve the robustness in high-temperature and high-pressure states, and has come to complete the details of the present disclosure. The present disclosure provides use as refrigerant for a compressor, a compressor, and a refrigeration cycle apparatus in view of the following aspects.

Use as refrigerant for a compressor according to a first aspect is use of a composition as refrigerant for a compressor. The composition contains one or two or more selected from a group consisting of ethylene-based fluoroolefins, 2,3,3,3-tetrafluoropropene (HFO-1234yf), and 1,3,3,3-tetrafluoropropene (HFO-1234ze). The compressor includes any of: a discharge pipe made of metal having a greater heat capacity than a discharge pipe of a compressor that uses R32 as refrigerant; a discharge pipe made of metal having a greater heat capacity than a discharge pipe of a compressor that uses R410A as refrigerant; a discharge pipe made of metal having a greater heat capacity than a discharge pipe of a compressor that uses R134a as refrigerant; a discharge pipe made of metal having a greater heat capacity than a discharge pipe of a compressor that uses R404A as refrigerant; a casing that includes an intake pipe connection section made of metal having a greater heat capacity than an intake pipe connection section of a casing of the compressor that uses R32 as refrigerant; a casing that includes an intake pipe connection section made of metal having a greater heat capacity than an intake pipe connection section of a casing of the compressor that uses R410A as refrigerant; a casing that includes an intake pipe connection section made of metal having a greater heat capacity than an intake pipe connection section of a casing of the compressor that uses R134a as refrigerant; or a casing that includes an intake pipe connection section made of metal having a greater heat capacity than an intake pipe connection section of a casing of the compressor that uses R404A as refrigerant.

According to this use as refrigerant for a compressor, even if a disproportionation reaction occurs, the robustness in high-temperature and high-pressure states due to the reaction can be improved.

The use as refrigerant for a compressor according to a second aspect is the use as refrigerant for a compressor according to the first aspect wherein the compressor according to a second aspect includes any of: a discharge pipe made of metal having a higher specific heat than a discharge pipe of a compressor that uses R32 as refrigerant; a discharge pipe made of metal having a higher specific heat than a discharge pipe of a compressor that uses R410A as refrigerant; a discharge pipe made of metal having a higher specific heat than a discharge pipe of a compressor that uses R134a as refrigerant; a discharge pipe made of metal having a higher specific heat than a discharge pipe of a compressor that uses R404A as refrigerant; a casing that includes an intake pipe connection section made of metal having a higher specific heat than an intake pipe connection section of a casing of the compressor that uses R32 as refrigerant; a casing that includes an intake pipe connection section made of metal having a higher specific heat than an intake pipe connection section of a casing of the compressor that uses R410A as refrigerant; a casing that includes an intake pipe connection section made of metal having a higher specific heat than an intake pipe connection section of a casing of the compressor that uses R134a as refrigerant; or a casing that includes an intake pipe connection section made of metal having a higher specific heat than an intake pipe connection section of a casing of the compressor that uses R404A as refrigerant.

This use as refrigerant for a compressor can ensure high heat absorption by the pipe made of metal having a high specific heat even if a disproportionation reaction occurs.

The use as refrigerant for a compressor according to a third aspect is the use as refrigerant for a compressor according to the first or second aspect wherein the compressor includes any of: a discharge pipe having a higher mass per unit length than a discharge pipe of a compressor that uses R32 as refrigerant; a discharge pipe having a higher mass per unit length than a discharge pipe of a compressor that uses R410A as refrigerant; a discharge pipe having a higher mass per unit length than a discharge pipe of a compressor that uses R134a as refrigerant; a discharge pipe having a higher mass per unit length than a discharge pipe of a compressor that uses R404A as refrigerant; a casing that includes an intake pipe connection section having a higher mass per unit length than an intake pipe connection section of a casing of the compressor that uses R32 as refrigerant; a casing that includes an intake pipe connection section having a higher mass per unit length than an intake pipe connection section of a casing of the compressor that uses R410A as refrigerant; a casing that includes an intake pipe connection section having a higher mass per unit length than an intake pipe connection section of a casing of the compressor that uses R134a as refrigerant; or a casing that includes an intake pipe connection section having a higher mass per unit length than an intake pipe connection section of a casing of the compressor that uses R404A as refrigerant.

This use as refrigerant for a compressor can ensure high heat absorption by the pipe having a high mass per unit length even if a disproportionation reaction occurs.

The use as refrigerant for a compressor according to a fourth aspect is the use as refrigerant for a compressor according to any of the first to third aspects wherein the compressor includes any of: a discharge pipe that has a larger thickness than the discharge pipe of the compressor that uses R32 as refrigerant; a discharge pipe that has a larger thickness than the discharge pipe of the compressor that uses R410A as refrigerant; a discharge pipe that has a larger thickness than the discharge pipe of the compressor that uses R134a as refrigerant; a discharge pipe that has a larger thickness than the discharge pipe of the compressor that uses R404A as refrigerant; a casing that includes an intake pipe connection section that has a larger thickness than the intake pipe connection section of the casing of the compressor that uses R32 as refrigerant; a casing that includes an intake pipe connection section that has a larger thickness than the intake pipe connection section of the casing of the compressor that uses R410A as refrigerant; a casing that includes an intake pipe connection section that has a larger thickness than the intake pipe connection section of the casing of the compressor that uses R134a as refrigerant; or a casing that includes an intake pipe connection section that has a larger thickness than the intake pipe connection section of the casing of the compressor that uses R404A as refrigerant.

This use as refrigerant for a compressor can ensure high heat absorption and improve the compressive strength by the pipe having a large thickness even if a disproportionation reaction occurs.

The use as refrigerant for a compressor according to a fifth aspect is the use as refrigerant for a compressor according to any of the first to fourth aspects wherein the compressor includes the discharge pipe the number of which is one, and the intake pipe connection section the number of which is one.

This use as refrigerant for a compressor can improve the robustness even if a disproportionation reaction occurs and an environment load at high temperature and high pressure is concentrated on the only one pipe.

Use as refrigerant for a compressor according to a sixth aspect is use of a composition as refrigerant for a compressor. The composition contains one or two or more selected from a group consisting of ethylene-based fluoroolefins, 2,3,3,3-tetrafluoropropene (HFO-1234yf), and 1,3,3,3-tetrafluoropropene (HFO-1234ze). The compressor includes any of: a discharge pipe made of metal having a higher compressive strength than a discharge pipe of a compressor that uses R32 as refrigerant; a discharge pipe made of metal having a higher compressive strength than a discharge pipe of a compressor that uses R410A as refrigerant; a discharge pipe made of metal having a higher compressive strength than a discharge pipe of a compressor that uses R134a as refrigerant; a discharge pipe made of metal having a higher compressive strength than a discharge pipe of a compressor that uses R404A as refrigerant; a casing that includes an intake pipe connection section made of metal having a higher compressive strength than an intake pipe connection section of a casing of the compressor that uses R32 as refrigerant; a casing that includes an intake pipe connection section made of metal having a higher compressive strength than an intake pipe connection section of a casing of the compressor that uses R410A as refrigerant; a casing that includes an intake pipe connection section made of metal having a higher compressive strength than an intake pipe connection section of a casing of the compressor that uses R134a as refrigerant; or a casing that includes an intake pipe connection section made of metal having a higher compressive strength than the intake pipe connection section of the casing of the compressor that uses R404A as refrigerant.

Note that the use as refrigerant for a compressor according to the sixth aspect may be the use as refrigerant for a compressor according to any of the first to fifth aspects.

According to this use as refrigerant for a compressor, even if a disproportionation reaction occurs, the robustness in high-temperature and high-pressure states due to the reaction can be improved.

Use as refrigerant for a compressor according to a seventh aspect is use of a composition as refrigerant for a compressor. The composition contains one or two or more selected from a group consisting of ethylene-based fluoroolefins, 2,3,3,3-tetrafluoropropene (HFO-1234yf), and 1,3,3,3-tetrafluoropropene (HFO-1234ze). The compressor includes: a discharge pipe; an intake pipe; and a casing that includes a discharge pipe connection section and an intake pipe connection section. As for the compressor, the discharge pipe is screwed and fixed to the discharge pipe connection section, the discharge pipe is welded and fixed to the discharge pipe connection section, the intake pipe is screwed and fixed to the intake pipe connection section, or the intake pipe is welded and fixed to the intake pipe connection section.

Note that the use as refrigerant for a compressor according to the seventh aspect may be the use as refrigerant for a compressor according to any of the first to sixth aspects.

According to this use as refrigerant for a compressor, even if a disproportionation reaction occurs, the robustness in high-temperature and high-pressure states due to the reaction can be improved.

Use as refrigerant for a compressor according to an eighth aspect is use of a composition as refrigerant for a compressor. The composition contains one or two or more selected from a group consisting of ethylene-based fluoroolefins, 2,3,3,3-tetrafluoropropene (HFO-1234yf), and 1,3,3,3-tetrafluoropropene (HFO-1234ze). The compressor includes a discharge pipe, and a casing to which the discharge pipe is connected. The discharge pipe includes a curved section that bends, for the first time, a travel direction of the refrigerant flowing from the casing. The curved section has a larger radius of curvature than any of a discharge pipe of a compressor that uses R32 as refrigerant; a discharge pipe of a compressor that uses R410A as refrigerant; a discharge pipe of a compressor that uses R134a as refrigerant; or a discharge pipe of a compressor that uses R404A as refrigerant.

Note that the use as refrigerant for a compressor according to the eighth aspect may be the use as refrigerant for a compressor according to any of the first to seventh aspects.

According to this use as refrigerant for a compressor, even if a disproportionation reaction occurs, the robustness in high-temperature and high-pressure states due to the reaction can be improved.

The use as refrigerant for a compressor according to a ninth aspect is the use as refrigerant for a compressor according to any of the first to eighth aspects wherein the composition contains one or two or more selected from a group consisting of trans-1,2-difluoroethylene (HFO-1132(E)), cis-1,2-difluoroethylene (HFO-1132(Z)), 1,1-difluoroethylene (HFO-1132a), 1,1,2-trifluoroethylene (HFO-1123), monofluoroethylene (HFO-1141), chlorotrifluoroethylene (CFO-1113), and perfluoro-olefin.

The use as refrigerant for a compressor according to a tenth aspect is the use as refrigerant for a compressor according to the ninth aspect wherein the composition contains one or two or more selected from a group consisting of trans-1,2-difluoroethylene (HFO-1132(E)), cis-1,2-difluoroethylene (HFO-1132(Z)), and 1,1,2-trifluoroethylene (HFO-1123).

A compressor according to an eleventh aspect is a compressor that uses a composition as refrigerant. The composition contains one or two or more selected from a group consisting of ethylene-based fluoroolefins, 2,3,3,3-tetrafluoropropene (HFO-1234yf), and 1,3,3,3-tetrafluoropropene (HFO-1234ze). The compressor includes any of: a discharge pipe made of metal having a greater heat capacity than a discharge pipe of a compressor that uses R32 as refrigerant; a discharge pipe made of metal having a greater heat capacity than a discharge pipe of a compressor that uses R410A as refrigerant; a discharge pipe made of metal having a greater heat capacity than a discharge pipe of a compressor that uses R134a as refrigerant; a discharge pipe made of metal having a greater heat capacity than a discharge pipe of a compressor that uses R404A as refrigerant; a casing that includes an intake pipe connection section made of metal having a greater heat capacity than an intake pipe connection section of a casing of the compressor that uses R32 as refrigerant; a casing that includes an intake pipe connection section made of metal having a greater heat capacity than an intake pipe connection section of a casing of the compressor that uses R410A as refrigerant; a casing that includes an intake pipe connection section made of metal having a greater heat capacity than an intake pipe connection section of a casing of the compressor that uses R134a as refrigerant; or a casing that includes an intake pipe connection section made of metal having a greater heat capacity than an intake pipe connection section of a casing of the compressor that uses R404A as refrigerant.

According to this compressor, even if a disproportionation reaction occurs, the robustness in high-temperature and high-pressure states due to the reaction can be improved.

The compressor according to twelfth aspect is the compressor according to the eleventh aspect, including any of: a discharge pipe made of metal having a higher specific heat than the discharge pipe of the compressor that uses R32 as refrigerant; a discharge pipe made of metal having a higher specific heat than the discharge pipe of the compressor that uses R410A as refrigerant; a discharge pipe made of metal having a higher specific heat than the discharge pipe of the compressor that uses R134a as refrigerant; a discharge pipe made of metal having a higher specific heat than the discharge pipe of the compressor that uses R404A as refrigerant; a casing that includes an intake pipe connection section made of metal having a higher specific heat than the intake pipe connection section of the casing of the compressor that uses R32 as refrigerant; a casing that includes an intake pipe connection section made of metal having a higher specific heat than the intake pipe connection section of the casing of the compressor that uses R410A as refrigerant; a casing that includes an intake pipe connection section made of metal having a higher specific heat than the intake pipe connection section of the casing of the compressor that uses R134a as refrigerant; or a casing that includes an intake pipe connection section made of metal having a higher specific heat than the intake pipe connection section of the casing of the compressor that uses R404A as refrigerant.

This compressor can ensure high heat absorption by the pipe made of metal having a high specific heat even if a disproportionation reaction occurs.

The compressor according to a thirteenth aspect is the compressor according to the eleventh or twelfth aspect, including any of: a discharge pipe that has a higher mass per unit length than the discharge pipe of the compressor that uses R32 as refrigerant; a discharge pipe that has a higher mass per unit length than the discharge pipe of the compressor that uses R410A as refrigerant; a discharge pipe that has a higher mass per unit length than the discharge pipe of the compressor that uses R134a as refrigerant; a discharge pipe that has a higher mass per unit length than the discharge pipe of the compressor that uses R404A as refrigerant; a casing that includes an intake pipe connection section that has a higher mass per unit length than the intake pipe connection section of the casing of the compressor that uses R32 as refrigerant; a casing that includes an intake pipe connection section that has a higher mass per unit length than the intake pipe connection section of the casing of the compressor that uses R410A as refrigerant; a casing that includes an intake pipe connection section that has a higher mass per unit length than the intake pipe connection section of the casing of the compressor that uses R134a as refrigerant; or a casing that includes an intake pipe connection section that has a higher mass per unit length than the intake pipe connection section of the casing of the compressor that uses R404A as refrigerant.

This compressor can ensure high heat absorption by the pipe having a high mass per unit length even if a disproportionation reaction occurs.

The compressor according to a fourteenth aspect is the compressor according to any of the eleventh to thirteenth aspects wherein the compressor includes any of: a discharge pipe that has a larger thickness than the discharge pipe of the compressor that uses R32 as refrigerant; a discharge pipe that has a larger thickness than the discharge pipe of the compressor that uses R410A as refrigerant; a discharge pipe that has a larger thickness than the discharge pipe of the compressor that uses R134a as refrigerant; a discharge pipe that has a larger thickness than the discharge pipe of the compressor that uses R404A as refrigerant; a casing that includes an intake pipe connection section that has a larger thickness than the intake pipe connection section of the casing of the compressor that uses R32 as refrigerant; a casing that includes an intake pipe connection section that has a larger thickness than the intake pipe connection section of the casing of the compressor that uses R410A as refrigerant; a casing that includes an intake pipe connection section that has a larger thickness than the intake pipe connection section of the casing of the compressor that uses R134a as refrigerant; or a casing that includes an intake pipe connection section that has a larger thickness than the intake pipe connection section of the casing of the compressor that uses R404A as refrigerant.

This compressor can ensure high heat absorption and improve the compressive strength by the pipe having a large thickness even if a disproportionation reaction occurs.

The compressor according to a fifteenth aspect is the compressor according to any of the eleventh to fourteenth aspects wherein the compressor includes the discharge pipe the number of which is one, and the intake pipe connection section the number of which is one.

This compressor can improve the robustness even if a disproportionation reaction occurs and an environment load at high temperature and high pressure is concentrated on the only one pipe.

A compressor according to a sixteenth aspect is a compressor that uses a composition as refrigerant. The composition contains one or two or more selected from a group consisting of ethylene-based fluoroolefins, 2,3,3,3-tetrafluoropropene (HFO-1234yf), and 1,3,3,3-tetrafluoropropene (HFO-1234ze). The compressor includes any of: a discharge pipe made of metal having a higher compressive strength than a discharge pipe of a compressor that uses R32 as refrigerant; a discharge pipe made of metal having a higher compressive strength than a discharge pipe of a compressor that uses R410A as refrigerant; a discharge pipe made of metal having a higher compressive strength than a discharge pipe of a compressor that uses R134a as refrigerant; a discharge pipe made of metal having a higher compressive strength than a discharge pipe of a compressor that uses R404A as refrigerant; a casing that includes an intake pipe connection section made of metal having a higher compressive strength than an intake pipe connection section of a casing of the compressor that uses R32 as refrigerant; a casing that includes an intake pipe connection section made of metal having a higher compressive strength than an intake pipe connection section of a casing of the compressor that uses R410A as refrigerant; a casing that includes an intake pipe connection section made of metal having a higher compressive strength than an intake pipe connection section of a casing of the compressor that uses R134a as refrigerant; or a casing that includes an intake pipe connection section made of metal having a higher compressive strength than the intake pipe connection section of the casing of the compressor that uses R404A as refrigerant.

Note that the compressor according to the sixteenth aspect may be the compressor according to any of the eleventh to fifteenth aspects.

According to this compressor, even if a disproportionation reaction occurs, the robustness in high-temperature and high-pressure states due to the reaction can be improved.

A compressor according to a seventeenth aspect is a compressor that uses a composition as refrigerant. The composition contains one or two or more selected from a group consisting of ethylene-based fluoroolefins, 2,3,3,3-tetrafluoropropene (HFO-1234yf), and 1,3,3,3-tetrafluoropropene (HFO-1234ze). The compressor includes: a discharge pipe; an intake pipe; and a casing that includes a discharge pipe connection section and an intake pipe connection section. As for the compressor, the discharge pipe is screwed and fixed to the discharge pipe connection section, the discharge pipe is welded and fixed to the discharge pipe connection section, the intake pipe is screwed and fixed to the intake pipe connection section, or the intake pipe is welded and fixed to the intake pipe connection section.

Note that the compressor according to the seventeenth aspect may be the compressor according to any of the eleventh to sixteenth aspects.

According to this compressor, even if a disproportionation reaction occurs, the robustness in high-temperature and high-pressure states due to the reaction can be improved.

A compressor according to an eighteenth aspect is a compressor that uses a composition as refrigerant. The composition contains one or two or more selected from a group consisting of ethylene-based fluoroolefins, 2,3,3,3-tetrafluoropropene (HFO-1234yf), and 1,3,3,3-tetrafluoropropene (HFO-1234ze). The compressor includes a discharge pipe, and a casing to which the discharge pipe is connected. The discharge pipe includes a curved section that bends, for the first time, a travel direction of the refrigerant flowing from the casing. The curved section has a larger radius of curvature than any of a discharge pipe of a compressor that uses R32 as refrigerant; a discharge pipe of a compressor that uses R410A as refrigerant; a discharge pipe of a compressor that uses R134a as refrigerant; or a discharge pipe of a compressor that uses R404A as refrigerant.

Note that the compressor according to the eighteenth aspect may be the compressor according to any of the eleventh to seventeenth aspects.

According to this compressor, even if a disproportionation reaction occurs, the robustness in high-temperature and high-pressure states due to the reaction can be improved.

The compressor according to the nineteenth aspect is the compressor according to any of the eleventh to eighteenth aspects wherein the discharge pipe is made of copper or a copper alloy.

A refrigeration cycle apparatus according to a twentieth aspect includes a refrigerant circuit that includes the compressor according to any of the eleventh to nineteenth aspects.

According to this refrigeration cycle apparatus, even if a disproportionation reaction occurs, the robustness in high-temperature and high-pressure states due to reaction can be improved.

### BRIEF DESCRIPTION OF THE DRAWINGS

Figure 1 is a schematic configuration diagram of a refrigeration cycle apparatus.
Figure 2 is a block configuration diagram of the refrigeration cycle apparatus.
Figure 3 is a side sectional view showing a schematic configuration of a compressor.
Figure 4 is a plan sectional view showing a cylinder chamber of the compressor and therearound.
Figure 5 is a schematic diagram showing a curved section of a compressor and therearound according to another embodiment G.

### DESCRIPTION OF EMBODIMENTS

Hereinafter, use as refrigerant for an apparatus of a composition, an apparatus, and a refrigeration cycle apparatus according to the present disclosure are specifically described with reference to examples. However, such description does not limit the content of the present disclosure.

### (1) Refrigeration cycle apparatus 1

A refrigeration cycle apparatus 1 is an apparatus that processes a heat load in a target space by performing a vapor-compression refrigeration cycle, and is, for example, an air-conditioning apparatus or the like that conditions air in the target space.

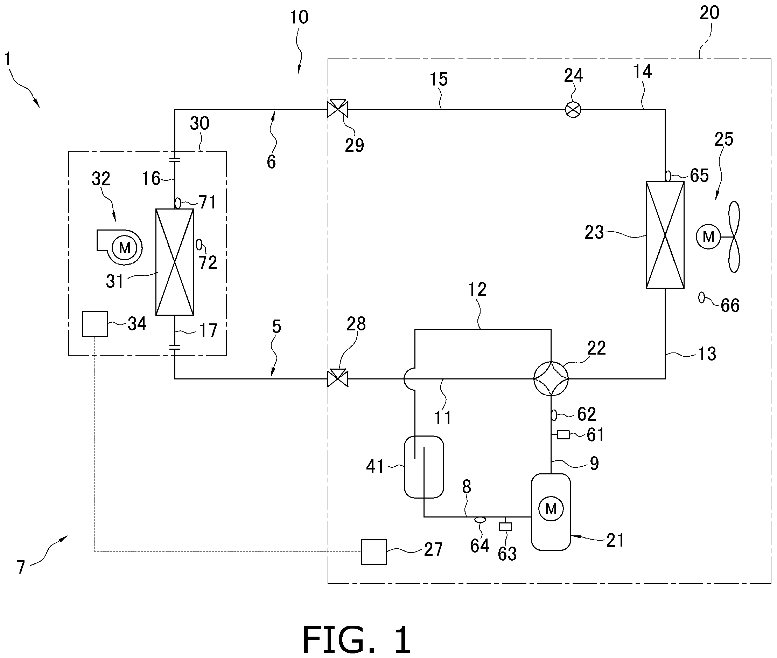

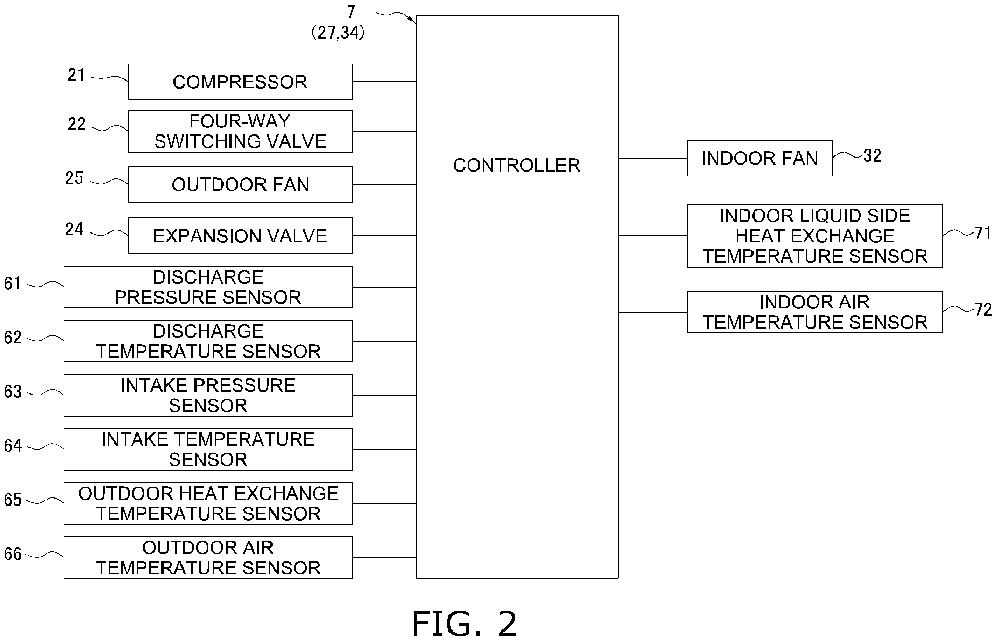

Figure 1 is a schematic configuration diagram of the refrigeration cycle apparatus. Figure 2 is a block configuration diagram of the refrigeration cycle apparatus.

The refrigeration cycle apparatus 1 mainly includes: an outdoor unit 20; an indoor unit 30; a liquid side refrigerant communication pipe 6 and a gas side refrigerant communication pipe 5 that connect the outdoor unit 20 and the indoor unit 30 to each other; a remote control, not illustrated; and a controller 7 that controls the operation of the refrigeration cycle apparatus 1.

In the refrigeration cycle apparatus 1, a refrigeration cycle is performed where refrigerant encapsulated in the refrigerant circuit 10 is compressed, cooled or condensed, decompressed, heated or evaporated, and then compressed again. In the present embodiment, the refrigerant circuit 10 is filled with refrigerant for performing a vapor-compression refrigeration cycle.

### (2) Refrigerant

The refrigerant contained in a refrigerant circuit 10 is refrigerant that contains one or two or more selected from a group consisting of ethylene-based fluoroolefins, 2,3,3,3-tetrafluoropropene (HFO-1234yf), and 1,3,3,3-tetrafluoropropene (HFO-1234ze). Note that the burning velocity defined in ISO817 of 1,3,3,3-tetrafluoropropene (HFO-1234ze) is 1.2 cm/s, which is preferable because this velocity is lower than 1.5 cm/s of 2,3,3,3-tetrafluoropropene (HFO-1234yf). Furthermore, LFL (Lower Flammability Limit) defined in ISO817 of 1,3,3,3-tetrafluoropropene (HFO-1234ze) is 65,000 vol.ppm 6.5%, which is preferable because this limit is higher than 62,000 vol.ppm 6.2% of 2,3,3,3-tetrafluoropropene (HFO-1234yf). Among them, the refrigerant may be, for example, a composition that contains one or two or more selected from a group consisting of trans-1,2-difluoroethylene (HFO-1132(E)), cis-1,2-difluoroethylene (HFO-1132(Z)), 1,1-difluoroethylene (HFO-1132a), 1,1,2-trifluoroethylene (HFO-1123), monofluoroethylene (HFO-1141), chlorotrifluoroethylene (CFO-1113), and perfluoro-olefin. In particular, it is preferable that the refrigerant be a composition that contains one or two or more selected from a group consisting of trans-1,2-difluoroethylene (HFO-1132(E)), cis-1,2-difluoroethylene (HFO-1132(Z)), and 1,1,2-trifluoroethylene (HFO-1123).

Note that the refrigerant circuit 10 is filled with a refrigerating machine oil together with the refrigerant described above.

### (3) Outdoor unit 20

The outdoor unit 20 is connected to the indoor unit 30 via the liquid side refrigerant communication pipe 6 and the gas side refrigerant communication pipe 5, and constitutes part of the refrigerant circuit 10. The outdoor unit 20 mainly includes a compressor 21, a four-way switching valve 22, an outdoor heat exchanger 23, an expansion valve 24, an outdoor fan 25, a receiver 41, a gas side shut-off valve 28, a liquid side shut-off valve 29, and a first refrigerant pipe 11 to a fifth refrigerant pipe 15.

The compressor 21 is a device that compresses the refrigerant at a low pressure in the refrigeration cycle to a high pressure. Here, the compressor 21 may be a hermetic compressor in which a rotary-type or scroll-type positive-displacement compression element is driven to rotate by the compressor motor. In the present embodiment, a rotary compressor is used. A compressor motor is for changing the volume, and the operation frequency can be controlled by an inverter. The compressor 21 includes an intake pipe 8 connected to an intake side. The intake pipe 8 is a pipe for introducing the refrigerant into the compressor 21, and in the present embodiment, this pipe connects a receiver 41 to the inside of the compressor 21. Note that in the present embodiment, only one intake pipe 8 is provided. The entire refrigerant taken into the compressor 21 flows through this single intake pipe 8. The compressor 21 includes a discharge pipe 9 connected to a discharge side. The discharge pipe 9 is a pipe for discharging the refrigerant from the inside of the compressor 21 to the outside. In the present embodiment, this pipe connects the inside of the compressor 21 to the four-way switching valve 22. Note that in the present embodiment, only one discharge pipe 9 is provided. The entire refrigerant discharged from the compressor 21 flows through this single discharge pipe 9.

The four-way switching valve 22 is a valve that switches the flow path by a disc, not illustrated, being controlled to move, and is a valve that switches the refrigerant circuit 10 between a cooling connection state and a heating connection state. Specifically, in the cooling connection state, the four-way switching valve 22 is switched to a state of connecting the discharge pipe 9 provided on the discharge side of the compressor 21 to the third refrigerant pipe 13 connected to the outdoor heat exchanger 23, and connecting the intake pipe 8 provided on the intake side of the compressor 21, the receiver 41, and the second refrigerant pipe 12 to the first refrigerant pipe 11 connected to the gas side shut-off valve 28. In the heating connection state, the four-way switching valve 22 is switched to a state of connecting the discharge pipe 9 provided on the discharge side of the compressor 21 to the first refrigerant pipe 11 connected to the gas side shut-off valve 28, and connecting the intake pipe 8 provided on the intake side of the compressor 21, the receiver 41, and the second refrigerant pipe 12 to the third refrigerant pipe 13 connected to the outdoor heat exchanger 23.

The outdoor heat exchanger 23 is a heat exchanger that functions as a radiator or a condenser for high-pressure refrigerant in the refrigeration cycle during cooling operation, and functions as a vaporizer for low-pressure refrigerant in the refrigeration cycle during heating operation. A gas side end of the outdoor heat exchanger 23 is connected to the four-way switching valve 22 via the third refrigerant pipe 13. A liquid side end of the outdoor heat exchanger 23 is connected to the expansion valve 24 via the fourth refrigerant pipe 14.

The expansion valve 24 is provided at a position from the liquid side outlet of the outdoor heat exchanger 23 to the liquid side shut-off valve 29 in the refrigerant circuit 10. The expansion valve 24 is an electric expansion valve that can adjust the valve opening degree by a disc, not illustrated, being controlled to move with respect to a valve seat, not illustrated. The expansion valve 24 and the liquid side shut-off valve 29 are connected to each other via the fifth refrigerant pipe 15.

The outdoor fan 25 takes external air into the outdoor unit 20, exchanges heat with the refrigerant in the outdoor heat exchanger 23, and subsequently, causes an air flow to be discharged to the outside. The outdoor fan 25 is driven by an outdoor fan motor to rotate.

The receiver 41 is a refrigerant container that is provided between the intake pipe 8 provided on the intake side of the compressor 21 and one of connection ports of the four-way switching valve 22, and can store excess refrigerant in the refrigerant circuit 10, as liquid refrigerant. The entry side of the receiver 41 is connected to the four-way switching valve 22 via the second refrigerant pipe 12. The exit side of the receiver 41 is connected to the intake side of the compressor 21 via the intake pipe 8.

The liquid side shut-off valve 29 is a manual valve disposed at a connection portion of the outdoor unit 20 with the liquid side refrigerant communication pipe 6.

The gas side shut-off valve 28 is a manual valve disposed at a connection portion of the outdoor unit 20 with the gas side refrigerant communication pipe 5.

The outdoor unit 20 includes an outdoor unit controller 27 that controls the operations of components that constitute the outdoor unit 20. The outdoor unit controller 27 includes a microcomputer that includes a processor such as a CPU, and a memory such as a ROM and a RAM. The outdoor unit controller 27 is connected to an indoor unit controller 34 of each indoor unit 30 via a communication line, and transmits and receives control signals and the like.

The outdoor unit 20 includes a discharge pressure sensor 61, a discharge temperature sensor 62, an intake pressure sensor 63, an intake temperature sensor 64, an outdoor heat exchange temperature sensor 65, and an outdoor air temperature sensor 66. Each of these sensors is electrically connected to the outdoor unit controller 27, and transmits a detection signal to the outdoor unit controller 27. The discharge pressure sensor 61 detects the pressure of the refrigerant flowing through the discharge pipe 9 that connects the discharge side of the compressor 21 and one of the connection ports of the four-way switching valve 22 to each other. The discharge temperature sensor 62 detects the temperature of the refrigerant flowing through the discharge pipe 9. The intake pressure sensor 63 detects the pressure of the refrigerant flowing through the intake pipe 8 that connects the intake side of the compressor 21 and the receiver 41 to each other. The intake temperature sensor 64 detects the temperature of the refrigerant flowing through the intake pipe 8. The outdoor heat exchange temperature sensor 65 detects the temperature of the refrigerant flowing through the outlet of the outdoor heat exchanger 23 on the liquid side opposite to the side to which the four-way switching valve 22 is connected. The outdoor air temperature sensor 66 detects the temperature of outdoor air having not passed through the outdoor heat exchanger 23 yet.

### (4) Indoor unit 30

The indoor unit 30 is installed on, for example, a wall, a ceiling or the like of a room that is a target space. The indoor unit 30 is connected to the outdoor unit 20 via the liquid side refrigerant communication pipe 6 and the gas side refrigerant communication pipe 5, and constitutes part of the refrigerant circuit 10.

The indoor unit 30 includes an indoor heat exchanger 31, a sixth refrigerant pipe 16, a seventh refrigerant pipe 17, and an indoor fan 32.

The indoor heat exchanger 31 is connected to the liquid side refrigerant communication pipe 6 via the sixth refrigerant pipe 16 on the liquid side, and connected to the gas side refrigerant communication pipe 5 via the seventh refrigerant pipe 17 on the gas side. The indoor heat exchanger 31 is a heat exchanger that functions as a vaporizer for low-pressure refrigerant in the refrigeration cycle during cooling operation, and functions as a condenser for high-pressure refrigerant in the refrigeration cycle during heating operation.

The indoor fan 32 takes indoor air into the indoor unit 30, exchanges heat with the refrigerant in the indoor heat exchanger 31, and subsequently, causes an air flow to be discharged to the outside. The indoor fan 32 is driven by an indoor fan motor to rotate.

Furthermore, the indoor unit 30 includes the indoor unit controller 34 that controls the operations of components that constitute the indoor unit 30. The indoor unit controller 34 includes a microcomputer that includes a processor such as a CPU, and a memory such as a ROM and a RAM. The indoor unit controller 34 is connected to an outdoor unit controller 27 via a communication line, and transmits and receives control signals and the like.

The indoor unit 30 includes an indoor liquid side heat exchange temperature sensor 71, and an indoor air temperature sensor 72. Each of these sensors is electrically connected to the indoor unit controller 34, and transmits a detection signal to the indoor unit controller 34. The indoor liquid side heat exchange temperature sensor 71 detects the temperature of the refrigerant flowing through the outlet of the indoor heat exchanger 31 on the liquid refrigerant side. The indoor air temperature sensor 72 detects the temperature of indoor air having not passed through the indoor heat exchanger 31 yet.

### (5) Controller 7

In the refrigeration cycle apparatus 1, the outdoor unit controller 27 and the indoor unit controller 34 are connected to each other via a communication line, thus constituting the controller 7 that controls the operation of the refrigeration cycle apparatus 1.

The controller 7 mainly includes a processor such as a CPU (Central Processing Unit), and a memory such as a ROM and a RAM. Note that various types of processing and control by the controller 7 are achieved by the integrally functioning components included in the outdoor unit controller 27 and/or the indoor unit controller 34.

### (6) Operation mode

The refrigeration cycle apparatus 1 can at least execute a cooling operation mode and a heating operation mode.

The controller 7 determines whether the mode is the cooling operation mode or the heating operation mode, based on an instruction accepted from the remote control or the like, and executes the mode.

In the cooling operation mode, the operation frequency of the compressor 21 is subjected to volume control such that the evaporating temperature of the refrigerant in the refrigerant circuit 10 can be a target evaporating temperature, for example.

The gas refrigerant discharged from the compressor 21 passes through the four-way switching valve 22 and is condensed in the outdoor heat exchanger 23. The refrigerant having flown through the outdoor heat exchanger 23 is decompressed when passing through the expansion valve 24.

The refrigerant decompressed at the expansion valve 24 flows through the liquid side refrigerant communication pipe 6 via the liquid side shut-off valve 29, and is sent to the indoor unit 30. Subsequently, the refrigerant is evaporated in the indoor heat exchanger 31, and flows into the gas side refrigerant communication pipe 5. The refrigerant having flown through the gas side refrigerant communication pipe 5 passes through the gas side shut-off valve 28, the four-way switching valve 22, and the receiver 41, and is taken in again by the compressor 21.

In the heating operation mode, the operation frequency of the compressor 21 is subjected to volume control such that the condensation temperature of the refrigerant in the refrigerant circuit 10 can be a target condensation temperature, for example.

The gas refrigerant discharged from the compressor 21 flows through the four-way switching valve 22 and the gas side refrigerant communication pipe 5, subsequently flows to the gas side end of the indoor heat exchanger 31 of the indoor unit 30, and is condensed or radiates heat in the indoor heat exchanger 31. The refrigerant condensed or subjected to heat radiation in the indoor heat exchanger 31 flows through the liquid side refrigerant communication pipe 6, and flows into the outdoor unit 20.

The refrigerant having passed through the liquid side shut-off valve 29 of the outdoor unit 20 is decompressed at the expansion valve 24. The refrigerant decompressed at the expansion valve 24 is evaporated in the outdoor heat exchanger 23, passes through the four-way switching valve 22 and the receiver 41, and is taken in again by the compressor 21.

### (7) Detailed configuration of compressor 21

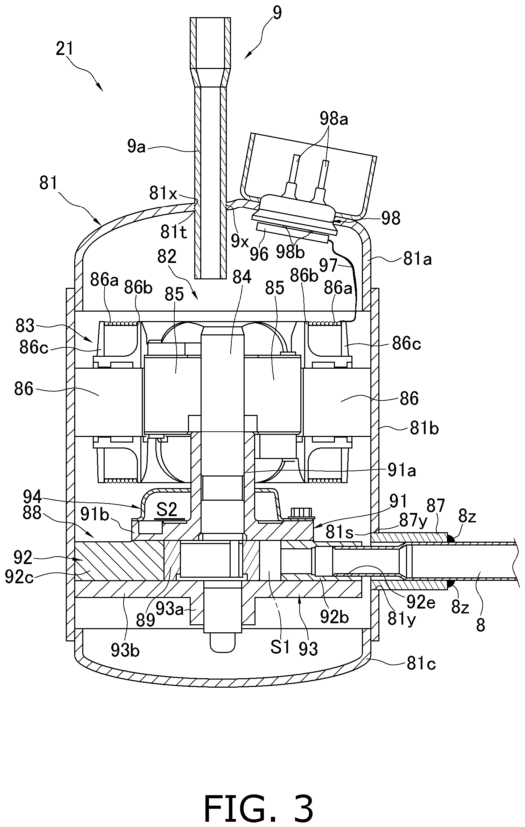

The compressor 21 in the present embodiment is a rotary compressor and, as shown in Figure 3, is a single-cylinder rotary compressor that includes a casing 81, and a drive mechanism 82 and a compression mechanism 88 that are disposed in the casing 81. As for the compressor 21, the compression mechanism 88 is disposed below the drive mechanism 82 in the casing 81.

### (7-1) Casing 81 and intake and discharge flow paths

The casing 81 includes an upper casing 81a, an intermediate casing 81b, a lower casing 81c, and an intake pipe connection section 87. The upper casing 81a, the intermediate casing 81b, the lower casing 81c, and the intake pipe connection section 87 are made of metal having a sufficiently ensured compressive strength.

The intermediate casing 81b is a member that cylindrically extends at the center portion of the compressor 21 so as to align the axial direction with the vertical direction. The upper casing 81a is a member having a dome shape that is convex upward so as to cover the top of the intermediate casing 81b. The lower casing 81c is a member having a dome shape that is convex downward so as to cover the bottom of the intermediate casing 81b. The intermediate casing 81b is provided with an intake pipe opening 81s penetrating through a radial direction that is a plate-thickness direction.

The intake pipe connection section 87 is a single cylindrical member that extends outward in the radial direction from the intake pipe connection section 87, and concentrically covers the only one intake pipe 8 from the outside in the radial direction. In the present embodiment, the intake pipe connection section 87 is made of copper, such as C1220, or a copper alloy. The intake pipe connection section 87 is fixed in a state of being inserted into the intake pipe opening 81s in the intermediate casing 81b. Threads 87y are provided in part of an outer peripheral portion of the intake pipe connection section 87. Thread grooves 81y corresponding to the threads 87y of the intake pipe connection section 87 are provided in an inner peripheral portion of an intake pipe opening 81s of the intermediate casing 81b. Accordingly, the intake pipe connection section 87 is screwed and thus fixed to the intermediate casing 81b. Note that the intake pipe connection section 87 is in a state of being screwed to the intermediate casing 81b, and is welded to the intermediate casing 81b, thus being more firmly fixed. As for the intake pipe 8, the outer peripheral portion of the intake pipe 8 and the inner peripheral portion of the intake pipe connection section 87 are in contact with each other, and are brazed to each other using a brazing material 8z. Note that the melting point of the brazing material 8z is lower than the melting point of the intake pipe 8, which is to be brazed, and is lower than the melting point of the intake pipe connection section 87.

The upper casing 81a is provided with a discharge pipe opening 81t penetrating therethrough in the vertical direction that is the plate-thickness direction. The discharge pipe 9 includes a discharge cylindrical section 9a that is a portion connected to the casing 81 of the compressor 21 and extends in the vertical direction. In the present embodiment, the discharge cylindrical section 9a is made of copper, such as C1220, or a copper alloy. The discharge cylindrical section 9a is fixed in a state of being inserted into the discharge pipe opening 81t of the upper casing 81a. Threads 9x are provided in part of the outer peripheral portion of the discharge cylindrical section 9a. Threads 81x corresponding to the threads 9x of the discharge cylindrical section 9a are provided in the inner peripheral portion of the discharge pipe opening 81t of the upper casing 81a. Accordingly, the discharge cylindrical section 9a is screwed and thus fixed to the upper casing 81a. Note that the discharge cylindrical section 9a is welded to the upper casing 81a in a state of being screwed to the upper casing 81a, thus being more firmly fixed.

Note that welding between the intake pipe connection section 87 and the intermediate casing 81b, and welding between the discharge cylindrical section 9a and the upper casing 81a are not limited, and for example, are arc welding, laser welding or the like.

In the present embodiment, the intake pipe connection section 87 used here has a greater heat capacity than an intake pipe connection section provided for a compressor that uses R32 as refrigerant. More specifically, in the present embodiment, the intake pipe connection section 87 used here has a larger thickness than the intake pipe connection section provided for the compressor that uses R32 as refrigerant. In the present embodiment, the intake pipe connection section 87 used here has a greater mass per unit length than the intake pipe connection section provided for the compressor that uses R32 as refrigerant. Preferably, the intake pipe connection section 87 is made of metal having a higher specific heat than the intake pipe connection section provided for the compressor that uses R32 as refrigerant.

In the present embodiment, the discharge cylindrical section 9a of the discharge pipe 9 used here has a greater heat capacity than the discharge cylindrical section 9a of the discharge pipe 9 provided in the compressor that uses R32 as refrigerant. More specifically, in the present embodiment, the discharge cylindrical section 9a of the discharge pipe 9 used here has a larger thickness than the discharge cylindrical section 9a of the discharge pipe 9 provided in the compressor that uses R32 as refrigerant. In the present embodiment, the discharge cylindrical section 9a of the discharge pipe 9 used here has a higher mass per unit length than the discharge cylindrical section 9a of the discharge pipe 9 provided in the compressor that uses R32 as refrigerant. Preferably, the discharge cylindrical section 9a of the discharge pipe 9 is made of metal having a higher specific heat than the discharge cylindrical section 9a of the discharge pipe 9 provided in the compressor that uses R32 as refrigerant.

Note that "compressor that uses R32 as refrigerant" to be compared may be a compressor that outputs the same horsepower. Furthermore, it is preferable that "compressor that uses R32 as refrigerant" to be compared have the same compression scheme. For example, rotary compressors may be compared with each other, scroll compressors may be compared with each other, or screw compressors may be compared with each other.

In the case of using the refrigerant in the present embodiment, for example, an intake pipe connection section 87 having a larger thickness than 0.8 mm is used for a rotary compressor having 1 horsepower, and an intake pipe connection section 87 having a larger thickness than 1.3 mm is used for a rotary compressor that outputs 5 horsepower.

In the case of using the refrigerant in the present embodiment, for example, a discharge cylindrical section 9a of a discharge pipe 9 having a larger thickness than 0.8 mm is used for a rotary compressor that outputs 1 horsepower, and a discharge cylindrical section 9a of a discharge pipe 9 having a larger thickness than 1.0 mm is used for a rotary compressor that outputs 5 horsepower.

### (7-2) Drive mechanism

The drive mechanism 82 is stored in an upper part of the inner space of the casing 81, and drives the compression mechanism 88. The drive mechanism 82 includes a motor 83 that serves as a drive source, and a crankshaft 84 that serves as a drive shaft attached to the motor 83.

The motor 83 is a motor that rotates and drives a crankshaft 84, and mainly includes a rotor 85 and stators 86. The rotor 85 has an inner space into which the crankshaft 84 is inserted, and rotates with the crankshaft 84. The rotor 85 includes stacked magnetic steel sheets, and magnets embedded in a rotor main body. The stators 86 are disposed outside of the rotor 85 in the radial direction with a predetermined space intervening therebetween. The stators 86 are arranged with a predetermined space intervening therebetween in the circumferential direction. The stators 86 each include stacked magnetic steel sheets, a coil 86a wound around a stator main body 86c including teeth 86b, and are provided in the circumferential direction. The motor 83 passes current through the coils 86a, and thereby rotates the rotor 85 and the crankshaft 84 by electromagnetic forces generated at the stators 86.

Here, a terminal section 98 for supplying power to the compressor 21 from the outside is provided at the upper end of the casing 81. The coil 86a of each stator 86 is supplied with power via a cluster 96 as a connection member connected to the terminal section 98 from the inside of the casing 81, and electric wiring 97 extending from the cluster 96.

The terminal section 98 includes outer pins 98a extending to the outside of the casing 81, and inner pins 98b extending to the inside of the casing 81, as terminal pins. The cluster 96 has a substantially rectangular parallelepiped shape. The external profile of the cluster 96 is formed of a resin. A portion into which the inner pins 98b of the terminal section 98 are inserted is provided on the surface of the cluster 96 facing the terminal section 98. In the configuration described above, while the compressor 21 is being driven, power is supplied from the outside, current passes through the outer pins 98a and the inner pins 98b of the terminal section 98, the electric wiring 97, and the coil 86a.

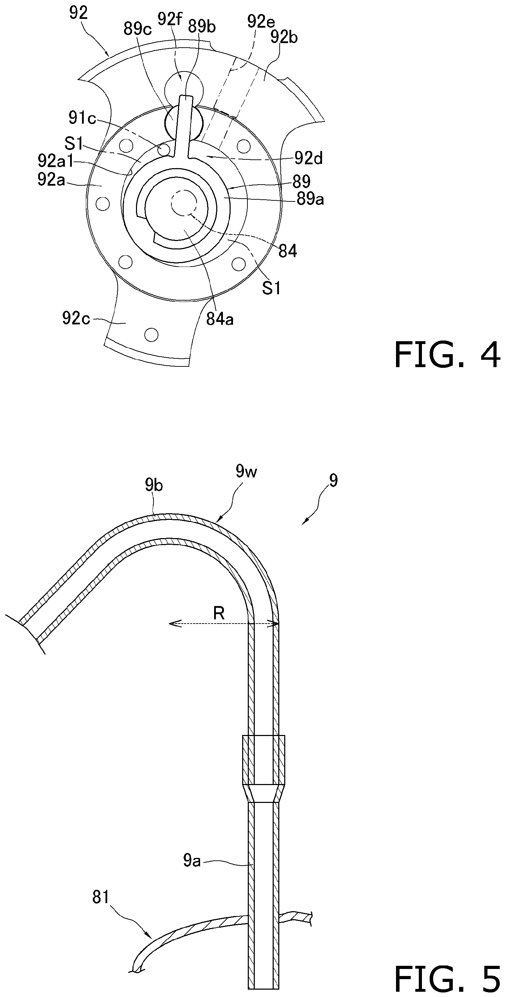

The crankshaft 84 is a substantially cylindrical-shaped member that is inserted into the rotor 85, and rotates around the rotational axis. As shown in Figure 4, a crankpin 84a that is an eccentric part of the crankshaft 84 is inserted into a roller 89a, described later, of a piston 89 of the compression mechanism 88, and is fit into the roller 89a in a state capable of transmitting a rotational force from the rotor 85. The crankshaft 84 rotates according to the rotation of the rotor 85, eccentrically rotates the crankpin 84a, and causes the roller 89a of the piston 89 of the compression mechanism 88 to orbit. That is, the crankshaft 84 has a function of transmitting the drive force of the motor 83 to the compression mechanism 88.

### (7-3) Compression mechanism

The compression mechanism 88 is stored in a lower part in the casing 81. The compression mechanism 88 compress the refrigerant taken in through the intake pipe 8. The compression mechanism 88 is a rotary compression mechanism, and mainly includes a front head 91, a cylinder 92, the piston 89, and a rear head 93. The refrigerant compressed in a compression chamber S1 of the compression mechanism 88 passes from a front head discharge port 91c formed in the front head 91 through a muffler space S2 surrounded by the front head 91 and a muffler 94, and is discharged to a space at which the motor 83 is disposed and the lower end of the discharge pipe 9 is positioned.

### (7-3-1) Cylinder

The cylinder 92 is a cast member made of metal. The cylinder 92 includes a cylindrical-shaped central section 92a, a first outer extension 92b that extends from the central section 92a to one of outsides in the radial direction, and a second extension 92c that extends from the central section 92a to the side opposite to the first outer extension 92b. An intake port 92e in the refrigeration cycle through which low-pressure refrigerant is taken in is formed in the first outer extension 92b. A cylindrical space in the inner peripheral surface 92a1 of the central section 92a serves as a cylinder chamber 92d into which the refrigerant taken in through the intake port 92e flows. The intake port 92e extends from the cylinder chamber 92d toward the outer peripheral surface of the first outer extension 92b, and opens at the outer peripheral surface of the first outer extension 92b. The distal end of the intake pipe 8 is inserted into the intake port 92e. The piston 89 and the like for compressing the refrigerant having flown into the cylinder chamber 92d are stored in the cylinder chamber 92d.

The cylinder chamber 92d formed of the cylindrical central section 92a of the cylinder 92 has a first end that is a lower end and opens, and a second end that is an upper end and opens. The first end that is the lower end of the central section 92a is blocked with the rear head 93, described later. The second end that is the upper end of the central section 92a is blocked with the front head 91, described later.

A blade oscillation space 92f in which a bush 89c and a blade 89b, described later, are disposed is formed in the cylinder 92. The blade oscillation space 92f is formed to span the central section 92a and the first outer extension 92b, and the blade 89b of the piston 89 is swingably supported by the cylinder 92 via the bush 89c. The blade oscillation space 92f is formed to extend from the cylinder chamber 92d toward the outer periphery in the vicinity of the intake port 92e in plan view.

### (7-3-2) Front head

As shown in Figure 3, the front head 91 includes a front head disc 91b that blocks the opening at the second end as the upper end of the cylinder 92, and an upper bearing 91a that extends upward from the peripheral edge of the front head opening at the center of the front head disc 91b. The upper bearing 91a has a cylindrical shape, and functions as a bearing for the crankshaft 84.

A slight gap is formed between the inner peripheral surface of the upper bearing 91a and the outer peripheral surface of the crankshaft 84 so as to allow the crankshaft 84 to rotate. Refrigerating machine oil is present in the gap, thus ensuring lubricity.

**In** the front head disc 91b, the front head discharge port 91c is formed at a plan position shown in Figure 4. The refrigerant compressed in the compression chamber S1 whose volume varies in the cylinder chamber 92d of the cylinder 92 is intermittently discharged from the front head discharge port 91c. The front head disc 91b is provided with a discharge valve that opens and closes the outlet of the front head discharge port 91c. When the pressure in the compression chamber S1 becomes higher than the pressure in the muffler space S2, the discharge valve is opened by the pressure difference, and allows the refrigerant to be discharged through the front head discharge port 91c into the muffler space S2.

### (7-3-3) Muffler

As shown in Figure 3, the muffler 94 is attached to the upper surface of the peripheral edge of the front head disc 91b of the front head 91. The muffler 94, and the upper surface of the front head disc 91b and the outer peripheral surface of the upper bearing 91a, form the muffler space S2, thus facilitating reduction in noise due to discharge of the refrigerant. The muffler space S2 and the compression chamber S1 communicate with each other through the front head discharge port 91c when the discharge valve is open, as described above.

In the muffler 94 there are formed a central muffler opening, not illustrated, through which the upper bearing 91a penetrates, and a muffler discharge port, not illustrated, through which the refrigerant flows from the muffler space S2 into the storage space for the motor 83 disposed above.

Note that all the muffler space S2, the storage space for the motor 83, the space above the motor 83 where the discharge pipe 9 is positioned, a space below the compression mechanism 88 where the lubricating oil is accumulated communicate with each other, thus forming high-pressure spaces at the same pressure.

### (7-3-4) Rear head

The rear head 93 includes a rear head disc 93b that blocks the opening at the first end, which is the lower end of the cylinder 92, and a lower bearing 93a that is a bearing and extends downward from the peripheral edge of the central opening in the rear head disc 93b. The front head disc 91b, the rear head disc 93b, and the central section 92a of the cylinder 92 form the cylinder chamber 92d as shown in Figure 4. The lower bearing 93a, and the upper bearing 91a described above, support the crankshaft 84.

A slight gap is formed between the inner peripheral surface of the lower bearing 93a and the outer peripheral surface of the crankshaft 84 so as to allow the crankshaft 84 to rotate. Refrigerating machine oil is present in the gap, thus ensuring lubricity.

### (7-3-5) Piston

The piston 89 is disposed in the cylinder chamber 92d, and is attached to the crankpin 84a that is an eccentric part of the crankshaft 84. The piston 89 is a member that integrally includes the roller 89a and the blade 89b. The blade 89b of the piston 89 is disposed in the blade oscillation space 92f formed in the cylinder 92, and is swingably supported by the cylinder 92 via the bush 89c as described above. The blade 89b is slidable against the bush 89c, slides during operation, and repeats movement of going away from the crankshaft 84 and approaching the crankshaft 84.

As shown in Figure 4, the roller 89a and the blade 89b of the piston 89 form the compression chamber S1 whose volume varies due to the orbiting piston 89 in a manner of partitioning the cylinder chamber 92d. The compression chamber S1 is a space surrounded by the inner peripheral surface 92a1 of the central section 92a of the cylinder 92, the upper surface of the rear head disc 93b, the lower surface of the front head disc 91b, and the piston 89. The volume of the compression chamber S1 varies due to the orbiting piston 89, the low-pressure refrigerant taken in through the intake port 92e is compressed, and becomes high-pressure refrigerant, which is discharged through the front head discharge port 91c to the muffler space S2.

### (7-4) Operation

In the compressor 21 described above, the volume of the compression chamber S1 varies due to the movement of the piston 89 of the compression mechanism 88 that orbits by the eccentric rotation of the crankpin 84a. Specifically, first, while the piston 89 is orbiting, low-pressure refrigerant is taken through the intake port 92e into the compression chamber S1. While the compression chamber S1 facing the intake port 92e is taking in the refrigerant, the volume of the chamber gradually increases. Furthermore, when the piston 89 orbits, the communication state between the compression chamber S1 and the intake port 92e is disengaged, and compression of refrigerant in the compression chamber S1 starts. Subsequently, the volume of the compression chamber S1 coming into the accommodation state with the front head discharge port 91c considerably reduces, and the pressure of the refrigerant becomes high accordingly. Subsequently, the refrigerant that reaches a high pressure by the further orbiting piston 89 opens the discharge valve from the front head discharge port 91c, and is discharged to the muffler space S2. The refrigerant introduced into the muffler space S2 is discharged through the muffler discharge port of the muffler 94 into the space above the muffler space S2. The refrigerant discharged to the outside of the muffler space S2 passes through the space between the rotor 85 and the stators 86 of the motor 83, cools the motor 83, and is then discharged through the discharge pipe 9.

### (8) Characteristics of embodiments

The refrigeration cycle apparatus 1 in the present embodiment uses refrigerant that may cause a disproportionation reaction.

The disproportionation reaction of the refrigerant occurs at a certain probability in an environment that satisfies a predetermined high temperature condition, high pressure condition, and ignition energy condition. If the disproportionation reaction occurs, the pressure may rise sharply therearound, and causes gas due to decomposition of the refrigerant.

As described above, use of the material with a great heat capacity can prevent the temperature from rapidly increasing, and can prevent the pipes from being broken or dropped, even if a disproportionation reaction occurs.

Against this backdrop, the inventors and the like configured a refrigeration cycle apparatus using a compressor as a sample described below, filled it with trans-1,2-difluoroethylene (HFO-1132(E)) as refrigerant, and conducted an experiment of actually causing a disproportionation reaction.

Specifically, as the sample, the compressor using R32, which was a conventional refrigerant, was used. In this sample compressor, as a counterpart to the discharge cylindrical section 9a of the discharge pipe 9, a conventional discharge cylindrical section was used that was a pipe that was not screwed and fixed but was brazed and fixed to the casing 81, without welding fixation, was made of a material of C1220, and had an outer diameter of 7.9 mm and a wall thickness of 0.8 mm. In this sample compressor, a conventional curved tube having a curved section with a radius of curvature of 20 mm was connected to the conventional discharge cylindrical section.

In this sample compressor, as a counterpart to the intake pipe connection section 87, a conventional intake pipe connection section was used that was not screwed and fixed but was brazed and fixed to the casing 81, without welding fixation, was made of a material of C1220, and had an outer diameter of 18 mm and a wall thickness of 0.8 mm. The cylinder volume of the compressor, which was used, was 9 cc/rev. In the sample described above, application of high energy to the space in the casing of the compressor caused a disproportionation reaction. As experiments of causing a disproportionation reaction, Experiments 1 and 2 were conducted using samples in the same condition.

As a result of Experiment 1, it was confirmed that the conventional discharge cylindrical section was dropped from the casing. At the same time, it was confirmed that a hole due to breakage had been formed in the outer periphery of the curve of the curved section of the conventional curved tube.

As a result of Experiment 2, it was confirmed that part of the conventional intake pipe connection section was broken, and a hole was formed.

In contrast to the above experiments, in the refrigeration cycle apparatus 1 that includes the compressor 21 in the present embodiment, the discharge cylindrical section 9a of the discharge pipe 9 is used that has an increased thickness, an increased mass per unit length, and an increased heat capacity in comparison with the discharge cylindrical section of the discharge pipe provided for the compressor that uses R32 as refrigerant. Accordingly, even if a disproportionation reaction occurs, the temperature in the discharge cylindrical section 9a of the discharge pipe 9 can be prevented from being abruptly increased, and the robustness of the discharge cylindrical section 9a of the discharge pipe 9 against a high-temperature and high-pressure state due to the reaction can be improved. Accordingly, the discharge cylindrical section 9a of the discharge pipe 9 can be prevented from being broken and dropped, gas caused by the disproportionation reaction can be prevented from being leaked, and the reliability of the compressor 21 can be improved.

In the refrigeration cycle apparatus 1 that includes the compressor 21 in the present embodiment, the intake pipe connection section 87 is used that has an increased thickness, an increased mass per unit length, and an increased heat capacity in comparison with the intake pipe connection section provided for the compressor that uses R32 as refrigerant. Accordingly, even if a disproportionation reaction occurs, the temperature in the intake pipe connection section 87 can be prevented from being abruptly increased, and the robustness of the intake pipe connection section 87 against a high-temperature and high-pressure state due to the reaction can be improved. Accordingly, the intake pipe connection section 87 can be prevented from being broken and dropped, gas caused by the disproportionation reaction can be prevented from being leaked, and the reliability of the compressor 21 can be improved.

In the present embodiment, the discharge cylindrical section 9a of the discharge pipe 9 is screwed and thus fixed to the upper casing 81a. Accordingly, even if a disproportionation reaction occurs, the discharge pipe 9 is prevented from being dropped from the upper casing 81a, gas caused by the disproportionation reaction can be prevented from being leaked, and the reliability of the compressor 21 can be improved.

In the present embodiment, the discharge cylindrical section 9a of the discharge pipe 9 is welded and fixed to the upper casing 81a. Accordingly, even if a disproportionation reaction occurs, the discharge pipe 9 is prevented from being dropped from the upper casing 81a, gas caused by the disproportionation reaction can be prevented from being leaked, and the reliability of the compressor 21 can be improved.

In the present embodiment, the intake pipe connection section 87 is screwed and thus fixed to the intermediate casing 81b. Accordingly, even if a disproportionation reaction occurs, the intake pipe connection section 87 is prevented from being dropped from the intermediate casing 81b, gas caused by the disproportionation reaction can be prevented from being leaked, and the reliability of the compressor 21 can be improved.

In the present embodiment, the intake pipe connection section 87 is welded and fixed to the intermediate casing 81b. Accordingly, even if a disproportionation reaction occurs, the intake pipe connection section 87 is prevented from being dropped from the intermediate casing 81b, gas caused by the disproportionation reaction can be prevented from being leaked, and the reliability of the compressor 21 can be improved.

The discharge cylindrical section 9a of the discharge pipe 9 and the intake pipe connection section 87 in the present embodiment are made of copper or a copper alloy. Accordingly, in the case where the connection destination is copper or a copper alloy, connection is allowed to be made between metals of the same type. Furthermore, the configuration of copper or a copper alloy allows pipes to be easily bent, which can improve the workability.

### (9) Other embodiments

### (9-1) Other embodiment A

The compressor 21 in the aforementioned embodiment is described with reference to the example where both the intake pipe connection section 87 and the discharge cylindrical section 9a of the discharge pipe 9 have the greater heat capacities in comparison with the compressor that uses R32.

Alternatively, only one of the intake pipe connection section 87 and the discharge cylindrical section 9a of the discharge pipe 9 may have a greater heat capacity than the compressor that uses R32.

### (9-2) Other embodiment B

The compressor 21 in the aforementioned embodiment is described with reference to the example where the intake pipe connection section 87 and the discharge cylindrical section 9a of the discharge pipe 9 have the greater heat capacities in comparison with the compressor that uses R32.

Alternatively, either the intake pipe connection section 87 or the discharge cylindrical section 9a of the discharge pipe 9 may have a greater heat capacity than the compressor that uses R410A. In this case, "compressor that uses R410 as refrigerant" to be compared may be a compressor that outputs the same horsepower. Furthermore, it is preferable that "compressor that uses R410A as refrigerant" to be compared have the same compression scheme. For example, rotary compressors may be compared with each other, scroll compressors may be compared with each other, or screw compressors may be compared with each other.

Alternatively, any of the intake pipe connection section 87 and the discharge cylindrical section 9a of the discharge pipe 9 may have a greater heat capacity than the compressor that uses R134a. In this case, "compressor that uses R134a as refrigerant" to be compared may be a compressor that outputs the same horsepower. Furthermore, it is preferable that "compressor that uses R134a as refrigerant" to be compared have the same compression scheme. For example, rotary compressors may be compared with each other, scroll compressors may be compared with each other, or screw compressors may be compared with each other.

Alternatively, the intake pipe connection section 87 or the discharge cylindrical section 9a of the discharge pipe 9 may have a greater heat capacity than the compressor that uses R404A. In this case, "compressor that uses R404A as refrigerant" to be compared may be a compressor that outputs the same horsepower. Furthermore, it is preferable that "compressor that uses R404A as refrigerant" to be compared have the same compression scheme. For example, rotary compressors may be compared with each other, scroll compressors may be compared with each other, or screw compressors may be compared with each other.

### (9-3) Other embodiment C

The compressors 21 in the aforementioned embodiment and the aforementioned other embodiment B are described with reference to the example where the intake pipe connection section 87 and the discharge cylindrical section 9a of the discharge pipe 9 have the greater heat capacities in comparison with the compressor that uses a specific refrigerant.

Alternatively, the intake pipe connection section 87 or the discharge cylindrical section 9a of the discharge pipe 9 to be used may satisfy any of a condition that it is what uses metal having a greater specific heat, a condition that it is what uses a higher mass per unit length, a condition that it is what has a larger thickness, and a condition that it is what is made of metal having a higher compressive strength, or may satisfy two or more among a condition that it is what uses metal having a greater specific heat, a condition that it is what uses a higher mass per unit length, a condition that it is what has a larger thickness, and a condition that it is what is made of metal having a higher compressive strength, in comparison with the compressor that uses any of R32, R410A, R134a, and R404A.

Here, the heat capacity has a value obtained by multiplying the specific heat and the mass. The example of increasing the heat capacity is not limited to the case of increasing the thickness or the mass per unit length of each pipe. Even if the thickness and the mass per unit length of each pipe are maintained, the heat capacity may be increased by using what has a greater specific heat as the metal material of which the pipes are made. More preferably, a metal material having a higher specific heat is used as the metal material of which the pipes are made, while increasing the thickness and the mass per unit length of each pipe. For example, with respect to the conventional case of using a copper alloy, such as C1220, as the material of which the intake pipe connection section 87 and the discharge cylindrical section 9a of the discharge pipe 9 are made, the material therefor having a higher specific heat than the copper alloy may be, for example, stainless steel, carbon steel or the like. As described above, use of the material having a higher specific heat can prevent the temperature from rapidly increasing, and can prevent the pipes from being broken or dropped, even if a disproportionation reaction occurs.

Here, the comparison of the compressive strength may be, for example, comparison with the value of a tensile strength according to a tensile test method for a metal material defined in ISO 6892-1. For example, with respect to the conventional case of using a copper alloy, such as C1220, as the material of which the intake pipe connection section 87 and the discharge cylindrical section 9a of the discharge pipe 9 are made, the material therefor having a higher compressive strength than the copper alloy may be, for example, stainless steel, such as SUS304 or SUS316, or carbon steel, such as STPG370 or STS370. As described above, use of the material having a high compressive strength can prevent the pipes from broken or dropped even if a disproportionation reaction occurs.

### (9-4) Other embodiment D

The compressor 21 in the aforementioned embodiment is described with reference to the example where the rotary compressor is used.

Alternatively, the compressor 21 may be a scroll compressor.

In the case of using the refrigerant in the aforementioned embodiment, for example, an intake pipe connection section 87 having a larger thickness than 1.2 mm is used for a scroll compressor that outputs 10 horsepower, and an intake pipe connection section 87 having a larger thickness than 1.5 mm is used for a rotary compressor that outputs 20 horsepower.

In the case of using the refrigerant in the aforementioned embodiment, for example, a discharge cylindrical section 9a of a discharge pipe 9 having a larger thickness than 1.2 mm is used for a scroll compressor that outputs 10 horsepower, and a discharge cylindrical section 9a of a discharge pipe 9 having a larger thickness than 1.5 mm is used for a scroll compressor that outputs 20 horsepower.

### (9-5) Other embodiment E

The compressor 21 in the aforementioned embodiment is described with reference to the example where the discharge cylindrical section 9a is screwed and thus fixed to the upper casing 81a, and is further welded and fixed, and the intake pipe connection section 87 is screwed and thus fixed to the intermediate casing 81b, and is further welded and fixed.

Alternatively, the discharge cylindrical section 9a may be screwed and thus fixed to the upper casing 81a without welding fixation. Alternatively, the discharge cylindrical section 9a may be welded and thus fixed to the upper casing 81a without screwing fixation. The intake pipe connection section 87 may be screwed and thus fixed to the intermediate casing 81b without welding fixation. The intake pipe connection section 87 may be welded and thus fixed to the intermediate casing 81b without screwing fixation.

### (9-6) Other embodiment F

The compressor 21 in the aforementioned embodiment is described with reference to the example where the heat capacity of the linearly extending discharge cylindrical section 9a of the discharge pipe 9 is increased.

Alternatively, for example, as shown in Figure 5, in a case where the discharge pipe 9 is connected to the discharge cylindrical section 9a and is configured to include a curved tube 9b having a curved section 9w, the compressor may have a larger radius of curvature R of the curved section 9w than the radius of curvature of the curved section of the discharge pipe of the compressor that uses R32 as refrigerant, the radius of curvature of the curved section of the discharge pipe of the compressor that uses R410A as refrigerant, the radius of curvature of the curved section of the discharge pipe of the compressor that uses R134a as refrigerant, or that of the discharge pipe of the compressor that uses R404A as refrigerant.

Here, the radius of curvature of the curved section may be the radius of curvature of the outer surface of the outer peripheral portion of the curved section 9w.

The curved section 9w may be a site of the discharge pipe 9 at which the travel direction of the refrigerant discharged from the inside of the casing 81 is bent first time.

If a disproportionation reaction occurs in the compressor 21, gas intensively passes through the discharge pipe 9. Accordingly, the curved section 9w, which is the site at which the travel direction of the gas is bent first time, is prone to breaking. Alternatively, the increase in radius of curvature of the curved section 9w can herein prevent the travel direction of gas from being abruptly changed, and gradually change the travel direction, which can prevent the pipes from being broken.

Note that in such a case of using the curved section with a large radius of curvature, similar to the aforementioned embodiment, it is preferable to use any of a discharge pipe made of metal having a greater specific heat, having a larger thickness, a higher mass per unit length, or a greater heat capacity, or to use a discharge pipe made of metal having a higher compressive strength, in comparison with the discharge pipe of the compressor using any of R32, R410A, R134a, or R404A as refrigerant.

### (9-7) Other embodiment G

The compressor 21 in the aforementioned embodiment is described with reference to the example where the single intake pipe connection section 87 and the discharge cylindrical section 9a of the single discharge pipe 9 have heat capacities increased by increasing the thicknesses of the pipes, in comparison with the compressor that uses R32.

However, the method of increasing the heat capacity of the pipe of the single intake pipe connection section 87 or the discharge cylindrical section 9a of the single discharge pipe 9 is not limited to this. Alternatively, for example, the heat capacity may be increased by adopting a pipe that includes multiple, or double or triple, layers in the radial direction.

### (9-8) Other embodiment H

The compressor 21 in the aforementioned embodiment is described with reference to the example where the single intake pipe connection section 87 and the discharge cylindrical section 9a of the single discharge pipe 9 have heat capacities increased by increasing the thicknesses in comparison with the compressor that uses R32.

However, the method of increasing the heat capacity of the pipe of the intake pipe connection section 87 or the discharge cylindrical section 9a of the discharge pipe 9 is not limited to this. For example, instead of the intake pipe connection section 87 in the aforementioned embodiment, an intake pipe connection section 87 may be made of multiple pipes in parallel with each other so as to allow the refrigerant to flow in parallel in a branched manner. For example, instead of the discharge cylindrical section 9a of the discharge pipe 9 in the aforementioned embodiment, a discharge cylindrical section 9a of a discharge pipe 9 may be made of multiple pipes in parallel with each other so as to allow the refrigerant to flow in parallel in a branched manner.

### (Supplement)

The embodiments in the present disclosure have thus been described above. It can be understood that the embodiments and the details may be variously changed without departing from the spirit and scope of the present disclosure described in the claims.

### REFERENCE SIGNS LIST

1 Refrigeration cycle apparatus
5 Gas side refrigerant communication pipe
6 Liquid side refrigerant communication pipe
8 Intake pipe
9 Discharge pipe
9a Discharge cylindrical section (discharge pipe)
9b Curved tube (discharge pipe)
9w Curved section
10 Refrigerant circuit
11 to 17 First to seventh refrigerant pipes
21 Compressor
81 Casing
81s Intake pipe opening
81t Discharge pipe opening (discharge pipe connection section)
87 Intake pipe connection section

### CITATION LIST

### PATENT LITERATURE

<Patent Literature 1> JPA No. 2019-196312

## Claims

1. Use, as refrigerant for a compressor (21), of a composition that contains one or two or more selected from a group consisting of ethylene-based fluoroolefins, 2,3,3,3-tetrafluoropropene (HFO-1234yf), and 1,3,3,3-tetrafluoropropene (HFO-1234ze),
wherein the compressor includes any of:
a discharge pipe (9, 9a) made of metal having a greater heat capacity than a discharge pipe of a compressor that uses R32 as refrigerant;
a discharge pipe (9, 9a) made of metal having a greater heat capacity than a discharge pipe of a compressor that uses R410A as refrigerant;
a discharge pipe (9, 9a) made of metal having a greater heat capacity than a discharge pipe of a compressor that uses R134a as refrigerant;
a discharge pipe (9, 9a) made of metal having a greater heat capacity than a discharge pipe of a compressor that uses R404A as refrigerant;
a casing (81) that includes an intake pipe connection section (87) made of metal having a greater heat capacity than an intake pipe connection section of a casing of the compressor that uses R32 as refrigerant;
a casing (81) that includes an intake pipe connection section (87) made of metal having a greater heat capacity than an intake pipe connection section of a casing of the compressor that uses R410A as refrigerant;
a casing (81) that includes an intake pipe connection section (87) made of metal having a greater heat capacity than an intake pipe connection section of a casing of the compressor that uses R134a as refrigerant; or
a casing (81) that includes an intake pipe connection section (87) made of metal having a greater heat capacity than an intake pipe connection section of a casing of the compressor that uses R404A as refrigerant.

2. The use as refrigerant for the compressor according to claim 1,
wherein the compressor includes any of:
a discharge pipe (9, 9a) made of metal having a higher specific heat than the discharge pipe of the compressor that uses R32 as refrigerant;
a discharge pipe (9, 9a) made of metal having a higher specific heat than the discharge pipe of the compressor that uses R410A as refrigerant;
a discharge pipe (9, 9a) made of metal having a higher specific heat than the discharge pipe of the compressor that uses R134a as refrigerant;
a discharge pipe (9, 9a) made of metal having a higher specific heat than the discharge pipe of the compressor that uses R404A as refrigerant;
a casing (81) that includes an intake pipe connection section (87) made of metal having a higher specific heat than the intake pipe connection section of the casing of the compressor that uses R32 as refrigerant;
a casing (81) that includes an intake pipe connection section (87) made of metal having a higher specific heat than the intake pipe connection section of the casing of the compressor that uses R410A as refrigerant;
a casing (81) that includes an intake pipe connection section (87) made of metal having a higher specific heat than the intake pipe connection section of the casing of the compressor that uses R134a as refrigerant; or
a casing (81) that includes an intake pipe connection section (87) made of metal having a higher specific heat than the intake pipe connection section of the casing of the compressor that uses R404A as refrigerant.

3. The use as refrigerant for the compressor according to claim 1 or 2,
wherein the compressor includes any of:
a discharge pipe (9, 9a) that has a higher mass per unit length than the discharge pipe of the compressor that uses R32 as refrigerant;
a discharge pipe (9, 9a) that has a higher mass per unit length than the discharge pipe of the compressor that uses R410A as refrigerant;
a discharge pipe (9, 9a) that has a higher mass per unit length than the discharge pipe of the compressor that uses R134a as refrigerant;
a discharge pipe (9, 9a) that has a higher mass per unit length than the discharge pipe of the compressor that uses R404A as refrigerant;
a casing (81) that includes an intake pipe connection section (87) that has a higher mass per unit length than the intake pipe connection section of the casing of the compressor that uses R32 as refrigerant;
a casing (81) that includes an intake pipe connection section (87) that has a higher mass per unit length than the intake pipe connection section of the casing of the compressor that uses R410A as refrigerant;
a casing (81) that includes an intake pipe connection section (87) that has a higher mass per unit length than the intake pipe connection section of the casing of the compressor that uses R134a as refrigerant; or
a casing (81) that includes an intake pipe connection section (87) that has a higher mass per unit length than the intake pipe connection section of the casing of the compressor that uses R404A as refrigerant.

4. The use as refrigerant for the compressor according to any one of claims 1 to 3,
wherein the compressor includes any of:
a discharge pipe (9, 9a) that has a larger thickness than the discharge pipe of the compressor that uses R32 as refrigerant;
a discharge pipe (9, 9a) that has a larger thickness than the discharge pipe of the compressor that uses R410A as refrigerant;
a discharge pipe (9, 9a) that has a larger thickness than the discharge pipe of the compressor that uses R134a as refrigerant;
a discharge pipe (9, 9a) that has a larger thickness than the discharge pipe of the compressor that uses R404A as refrigerant;
a casing (81) that includes an intake pipe connection section (87) that has a larger thickness than the intake pipe connection section of the casing of the compressor that uses R32 as refrigerant;
a casing (81) that includes an intake pipe connection section (87) that has a larger thickness than the intake pipe connection section of the casing of the compressor that uses R410A as refrigerant;
a casing (81) that includes an intake pipe connection section (87) that has a larger thickness than the intake pipe connection section of the casing of the compressor that uses R134a as refrigerant; or
a casing (81) that includes an intake pipe connection section (87) that has a larger thickness than the intake pipe connection section of the casing of the compressor that uses R404A as refrigerant.

5. The use as refrigerant for the compressor according to any one of claims 1 to 4,
wherein the compressor includes the discharge pipe the number of which is one, and the intake pipe connection section the number of which is one.

6. Use, as refrigerant for a compressor (21), of a composition that contains one or two or more selected from a group consisting of ethylene-based fluoroolefins, 2,3,3,3-tetrafluoropropene (HFO-1234yf), and 1,3,3,3-tetrafluoropropene (HFO-1234ze),
wherein the compressor includes any of:
a discharge pipe (9, 9a) made of metal having a higher compressive strength than a discharge pipe of a compressor that uses R32 as refrigerant;
a discharge pipe (9, 9a) made of metal having a higher compressive strength than a discharge pipe of a compressor that uses R410A as refrigerant;
a discharge pipe (9, 9a) made of metal having a higher compressive strength than a discharge pipe of a compressor that uses R134a as refrigerant;
a discharge pipe (9, 9a) made of metal having a higher compressive strength than a discharge pipe of a compressor that uses R404A as refrigerant;
a casing (81) that includes an intake pipe connection section (87) made of metal having a higher compressive strength than an intake pipe connection section of a casing of the compressor that uses R32 as refrigerant;
a casing (81) that includes an intake pipe connection section (87) made of metal having a higher compressive strength than an intake pipe connection section of a casing of the compressor that uses R410A as refrigerant;
a casing (81) that includes an intake pipe connection section (87) made of metal having a higher compressive strength than an intake pipe connection section of a casing of the compressor that uses R134a as refrigerant; or
a casing (81) that includes an intake pipe connection section (87) made of metal having a higher compressive strength than the intake pipe connection section of the casing of the compressor that uses R404A as refrigerant.

7. Use, as refrigerant for a compressor (21), of a composition that contains one or two or more selected from a group consisting of ethylene-based fluoroolefins, 2,3,3,3-tetrafluoropropene (HFO-1234yf), and 1,3,3,3-tetrafluoropropene (HFO-1234ze),
wherein the compressor includes:
a discharge pipe (9, 9a);
an intake pipe (8); and
a casing (81) that includes a discharge pipe connection section (81t), and an intake pipe connection section (87), and
the discharge pipe is screwed and fixed to the discharge pipe connection section,
the discharge pipe is welded and fixed to the discharge pipe connection section,
the intake pipe is screwed and fixed to the intake pipe connection section, or
the intake pipe is welded and fixed to the intake pipe connection section.

8. Use, as refrigerant for a compressor (21), of a composition that contains one or two or more selected from a group consisting of ethylene-based fluoroolefins, 2,3,3,3-tetrafluoropropene (HFO-1234yf), and 1,3,3,3-tetrafluoropropene (HFO-1234ze),
wherein the compressor includes a discharge pipe (9, 9a, 9b), and a casing (81) to which the discharge pipe is connected,
the discharge pipe includes a curved section (9w) that bends, first time, a travel direction of the refrigerant flowing from the casing, and
the curved section has a larger radius of curvature than a discharge pipe of a compressor that uses R32 as refrigerant, a discharge pipe of a compressor that uses R410A as refrigerant, a discharge pipe of a compressor that uses R134a as refrigerant, or a discharge pipe of a compressor that uses R404A as refrigerant.

9. The use as refrigerant for the compressor according to any one of claims 1 to 8,
wherein the composition contains one or two or more selected from a group consisting of trans-1,2-difluoroethylene (HFO-1132(E)), cis-1,2-difluoroethylene (HFO-1132(Z)), 1,1-difluoroethylene (HFO-1132a), 1,1,2-trifluoroethylene (HFO-1123), monofluoroethylene (HFO-1141), chlorotrifluoroethylene (CFO-1113), and perfluoro-olefin.

10. The use as refrigerant for the compressor according to claim 9,
wherein the composition contains one or two or more selected from a group consisting of trans-1,2-difluoroethylene (HFO-1132(E)), cis-1,2-difluoroethylene (HFO-1132(Z)), and 1,1,2-trifluoroethylene (HFO-1123).

11. A compressor (21) using, as refrigerant, a composition that contains one or two or more selected from a group consisting of ethylene-based fluoroolefins, 2,3,3,3-tetrafluoropropene (HFO-1234yf), and 1,3,3,3-tetrafluoropropene (HFO-1234ze), the compressor including any of:
a discharge pipe (9, 9a) made of metal having a greater heat capacity than a discharge pipe of a compressor that uses R32 as refrigerant;
a discharge pipe (9, 9a) made of metal having a greater heat capacity than a discharge pipe of a compressor that uses R410A as refrigerant;
a discharge pipe (9, 9a) made of metal having a greater heat capacity than a discharge pipe of a compressor that uses R134a as refrigerant;
a discharge pipe (9, 9a) made of metal having a greater heat capacity than a discharge pipe of a compressor that uses R404A as refrigerant;
a casing (81) that includes an intake pipe connection section (87) made of metal having a greater heat capacity than an intake pipe connection section of a casing of the compressor that uses R32 as refrigerant;
a casing (81) that includes an intake pipe connection section (87) made of metal having a greater heat capacity than an intake pipe connection section of a casing of the compressor that uses R410A as refrigerant;
a casing (81) that includes an intake pipe connection section (87) made of metal having a greater heat capacity than an intake pipe connection section of a casing of the compressor that uses R134a as refrigerant; or
a casing (81) that includes an intake pipe connection section (87) made of metal having a greater heat capacity than an intake pipe connection section of a casing of the compressor that uses R404A as refrigerant.

12. The compressor according to claim 11, including any of:
a discharge pipe (9, 9a) made of metal having a higher specific heat than the discharge pipe of the compressor that uses R32 as refrigerant;
a discharge pipe (9, 9a) made of metal having a higher specific heat than the discharge pipe of the compressor that uses R410A as refrigerant;
a discharge pipe (9, 9a) made of metal having a higher specific heat than the discharge pipe of the compressor that uses R134a as refrigerant;
a discharge pipe (9, 9a) made of metal having a higher specific heat than the discharge pipe of the compressor that uses R404A as refrigerant;
a casing (81) that includes an intake pipe connection section (87) made of metal having a higher specific heat than the intake pipe connection section of the casing of the compressor that uses R32 as refrigerant;
a casing (81) that includes an intake pipe connection section (87) made of metal having a higher specific heat than the intake pipe connection section of the casing of the compressor that uses R410A as refrigerant;
a casing (81) that includes an intake pipe connection section (87) made of metal having a higher specific heat than the intake pipe connection section of the casing of the compressor that uses R134a as refrigerant; or
a casing (81) that includes an intake pipe connection section (87) made of metal having a higher specific heat than the intake pipe connection section of the casing of the compressor that uses R404A as refrigerant.

13. The compressor according to claim 11 or 12, including any of:
a discharge pipe (9, 9a) that has a higher mass per unit length than the discharge pipe of the compressor that uses R32 as refrigerant;
a discharge pipe (9, 9a) that has a higher mass per unit length than the discharge pipe of the compressor that uses R410A as refrigerant;
a discharge pipe (9, 9a) that has a higher mass per unit length than the discharge pipe of the compressor that uses R134a as refrigerant;
a discharge pipe (9, 9a) that has a higher mass per unit length than the discharge pipe of the compressor that uses R404A as refrigerant;
a casing (81) that includes an intake pipe connection section (87) that has a higher mass per unit length than the intake pipe connection section of the casing of the compressor that uses R32 as refrigerant;
a casing (81) that includes an intake pipe connection section (87) that has a higher mass per unit length than the intake pipe connection section of the casing of the compressor that uses R410A as refrigerant;
a casing (81) that includes an intake pipe connection section (87) that has a higher mass per unit length than the intake pipe connection section of the casing of the compressor that uses R134a as refrigerant; or
a casing (81) that includes an intake pipe connection section (87) that has a higher mass per unit length than the intake pipe connection section of the casing of the compressor that uses R404A as refrigerant.

14. The compressor according to any one of claims 11 to 13, including any of:
a discharge pipe (9, 9a) that has a larger thickness than the discharge pipe of the compressor that uses R32 as refrigerant;
a discharge pipe (9, 9a) that has a larger thickness than the discharge pipe of the compressor that uses R410A as refrigerant;
a discharge pipe (9, 9a) that has a larger thickness than the discharge pipe of the compressor that uses R134a as refrigerant;
a discharge pipe (9, 9a) that has a larger thickness than the discharge pipe of the compressor that uses R404A as refrigerant;
a casing (81) that includes an intake pipe connection section (87) that has a larger thickness than the intake pipe connection section of the casing of the compressor that uses R32 as refrigerant;
a casing (81) that includes an intake pipe connection section (87) that has a larger thickness than the intake pipe connection section of the casing of the compressor that uses R410A as refrigerant;
a casing (81) that includes an intake pipe connection section (87) that has a larger thickness than the intake pipe connection section of the casing of the compressor that uses R134a as refrigerant; or
a casing (81) that includes an intake pipe connection section (87) that has a larger thickness than the intake pipe connection section of the casing of the compressor that uses R404A as refrigerant.

15. The compressor according to any one of claims 11 to 14, including the discharge pipe the number of which is one, and the intake pipe connection section the number of which is one.

16. A compressor (21) using, as refrigerant, a composition that contains one or two or more selected from a group consisting of ethylene-based fluoroolefins, 2,3,3,3-tetrafluoropropene (HFO-1234yf), and 1,3,3,3-tetrafluoropropene (HFO-1234ze), the compressor including any of:
a discharge pipe (9, 9a) made of metal having a higher compressive strength than a discharge pipe of a compressor that uses R32 as refrigerant;
a discharge pipe (9, 9a) made of metal having a higher compressive strength than a discharge pipe of a compressor that uses R410A as refrigerant;
a discharge pipe (9, 9a) made of metal having a higher compressive strength than a discharge pipe of a compressor that uses R134a as refrigerant;
a discharge pipe (9, 9a) made of metal having a higher compressive strength than a discharge pipe of a compressor that uses R404A as refrigerant;
a casing (81) that includes an intake pipe connection section (87) made of metal having a higher compressive strength than an intake pipe connection section of a casing of the compressor that uses R32 as refrigerant;
a casing (81) that includes an intake pipe connection section (87) made of metal having a higher compressive strength than an intake pipe connection section of a casing of the compressor that uses R410A as refrigerant;
a casing (81) that includes an intake pipe connection section (87) made of metal having a higher compressive strength than an intake pipe connection section of a casing of the compressor that uses R134a as refrigerant; or
a casing (81) that includes an intake pipe connection section (87) made of metal having a higher compressive strength than an intake pipe connection section of a casing of the compressor that uses R404A as refrigerant.

17. A compressor (21) using, as refrigerant, a composition that contains one or two or more selected from a group consisting of ethylene-based fluoroolefins, 2,3,3,3-tetrafluoropropene (HFO-1234yf), and 1,3,3,3-tetrafluoropropene (HFO-1234ze), the compressor including:
a discharge pipe (9, 9a);
an intake pipe (8); and
a casing (81) that includes a discharge pipe connection section (81t), and an intake pipe connection section (87),
wherein the discharge pipe is screwed and fixed to the discharge pipe connection section,
the discharge pipe is welded and fixed to the discharge pipe connection section,
the intake pipe is screwed and fixed to the intake pipe connection section, or
the intake pipe is welded and fixed to the intake pipe connection section.

18. A compressor (21) using, as refrigerant, a composition that contains one or two or more selected from a group consisting of ethylene-based fluoroolefins, 2,3,3,3-tetrafluoropropene (HFO-1234yf), and 1,3,3,3-tetrafluoropropene (HFO-1234ze), the compressor including:
a discharge pipe (9, 9a, 9b); and
a casing (81) to which the discharge pipe is connected,
wherein the discharge pipe includes a curved section (9w) that bends, first time, a travel direction of the refrigerant flowing from the casing, and
the curved section has a larger radius of curvature than a discharge pipe of a compressor that uses R32 as refrigerant, a discharge pipe of a compressor that uses R410A as refrigerant, a discharge pipe of a compressor that uses R134a as refrigerant, or a discharge pipe of a compressor that uses R404A as refrigerant.

19. The compressor according to any one of claims 11 to 18,
wherein the discharge pipe (9, 9a) is made of copper or a copper alloy.

20. A refrigeration cycle apparatus (1), comprising a refrigerant circuit (10) that includes the compressor (21) according to any one of claims 11 to 19.
